# EUROPÄISCHE PATENTANMELDUNG

(11) **EP 0 971 293 A1**
(43) Veröffentlichungstag der Anmeldung: **12.01.2000**
(21) Anmeldenummer: 98109219.0
(22) Anmeldetag: 08.07.1998
(51) Int. Cl.: G06F 15/02

(54) **Euro-Währungsumrechner mit Wechselkursdatenfunkempfänger**

(71) Anmelder: Steil, Marcel, 83300 Draguignan (FR)
(72) Erfinder: Steil, Marcel, 83300 Draguignan (FR)
(74) Vertreter: Waxweiler, Jean

(57) **Zusammenfassung**

Die Erfindung betrifft ein Rechengerät zur Umrechnung von einer Währung in eine andere Währung, mit einem Speicher, einer Tastatur und einer Anzeigevorrichtung. Das Rechengerät umfasst ausserdem einen zur Umrechnung von einer oder mehreren Währungen in eine bestimmte Währung programmierten Rechner, einen für den Empfang eines Wechselkurses übertragenden Funksenders ausgelegten Datenfunkempfängers, und einen dem Datenfunkempfänger nachgeschalteten Datendemodulator an dessen Ausgang die vom Funksender übertragenen Währungswechselkurse bereitgestellt, an den Speicher weitergeleitet und für die Umrechnung der Währungen dem Rechner bereitgestellt werden.

## Beschreibung

In dem folgenden Text wird das Prinzip, der technische Aufbau und das Funktionsschema eines EURO-RADIO-KONVERTERS (kurz als ERK bezeichnet ) erläutert und beschrieben.

### Prinzip

Der ERK ist ganz allgemein ein tragbarer oder stationär betriebener elektronischer, funkgesteuerter Arithmetik-Rechner, der für die **Umrechnung der Weltwährungen in den EURO**, und **umgekehrt** konzipiert ist Diese Umrechnung kann über statisch und/oder dynamisch gespeicherte Umrechnungsfaktoren erfolgen. Der Rechner verfügt uber Wahrungs-Funktionstasten, mit deren Hilfe ein hoher Bedienungskomfort erreicht wird.

### Technischer Aufbau

Der Rechner ist mit 2 Datenspeichern ausgestattet
- ein nichtflüchtiger **Festdatenspeicher**, in dem die Umrechnungsfaktoren aller in einem festen Wechselkurs zum Euro stehenden Währungen abgespeichert sind und / oder
- ein **dynamischer Datenpeicher**, in den alle gegenüber dem EURO dynamisch sich verändernden, uber Funk übertragenen Wechselkurse abgespeichert werden

Der dynamische Speicher des ERK wird regelmassig uber einen in den Rechner eingebauten **Daten-Funkempfänger** mit den **Euro-Wechselkursdaten** gespeist, so dass der ERK jederzeit über eine dauernd aktualisierte **cross rate Tabelle** verfügt, und somit immer in der Lage ist, eine beliebige Währung in den Euro, und umgekehrt umzurechnen.
Die Umrechnungen können über eine im ERK eingebaute **Tastatur** getatigt werden. Das Rechenresultat wird über ein handelsübliches **Rechnerdisplay** angezeigt.

Der im ERK enthaltene Funkempfänger arbeitet in einem für **analogen oder digitalen Rundfunk, Fernsehen, Datenfunk, Satellitenfunk koordinierten und von den zuständigen nationalen/internationalen Behörden zugelassenen Frequenzband oder Funkkanal,** über den die Daten in transparentem oder kodiertem Modus zum ERK übertragen und dort für Wechselkursrechnungen in einem Speicher verfügbar gemacht werden

Die währungsspezifischen Daten werden von einem zustandigen Bankinstitut, über eine dauernd gemietete, oder im Wählverfahren betriebene Datenübertragungsstrecke regelmässig, oder auf Abruf, an den Funksenderstandort übertragen, hier auf den Sender aufmoduliert und zu allen ERK's übertragen.

Der Funkempfänger im ERK ist mit einem, der Uebertragungstechnik angepassten Demodulator ausgerüstet, von dessen Ausgang die Euro-Währungsdaten an den Rechnerspeicher weitergeleitet und hier für die Euro-Konversionsrechnung bereitgestellt werden.

Ein Funktionsschema des ERK, sowie der dazu gehörenden Funkübertragungstechnik befindet sich in der Anlage Referenz: Patentantrag 980512-Steil-AS-2

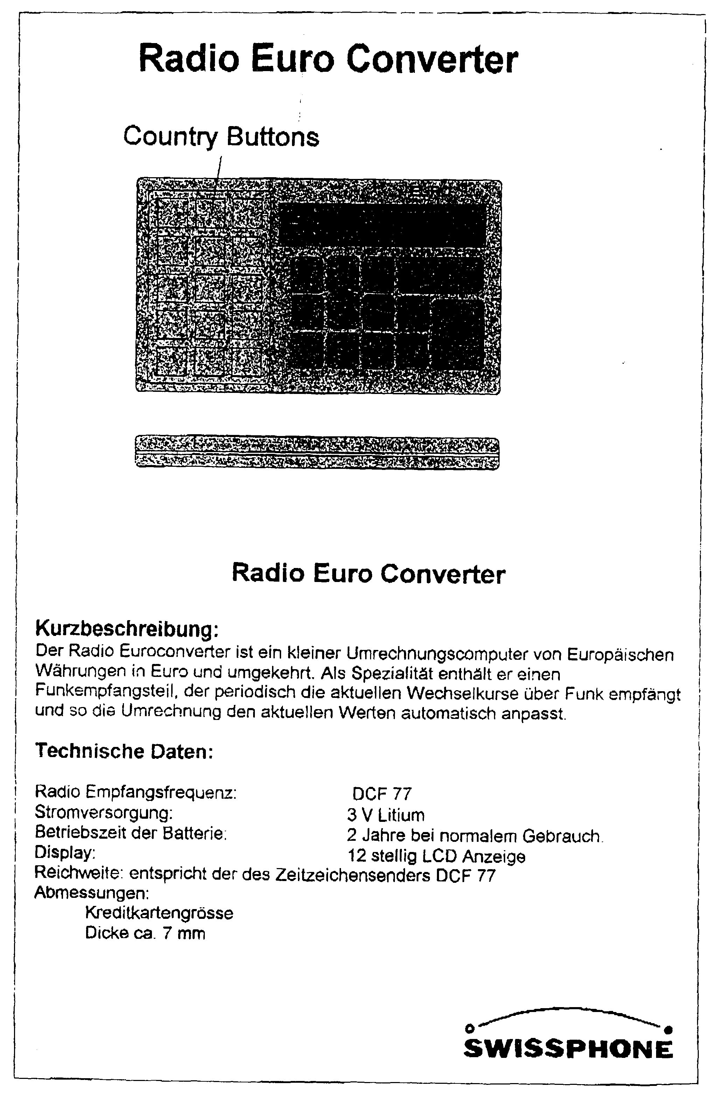

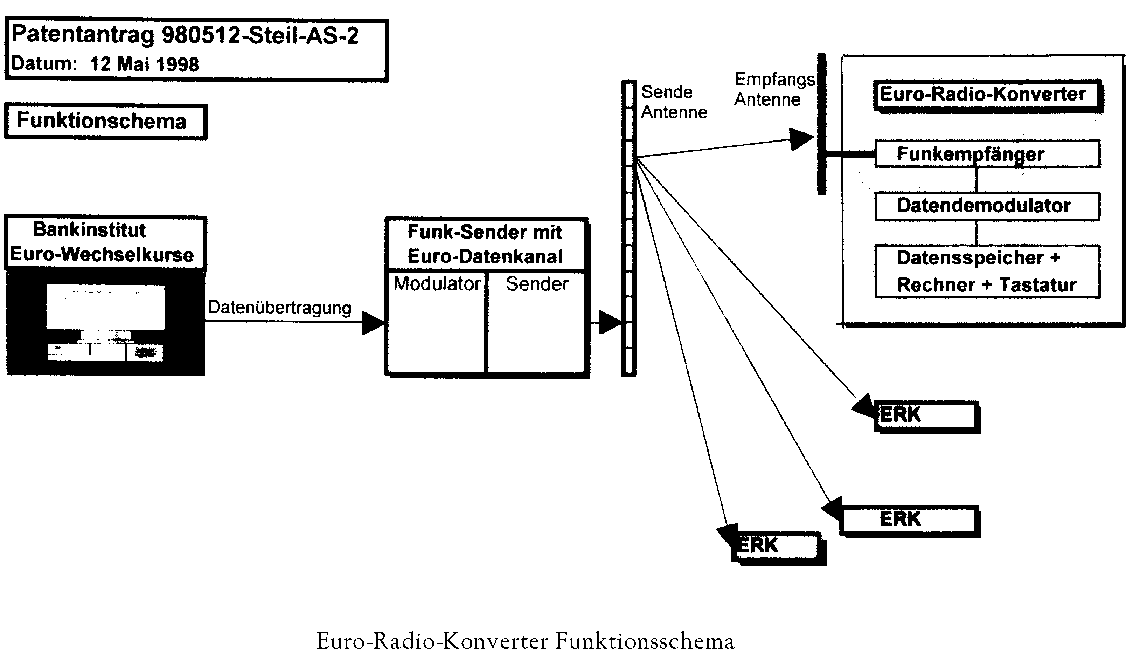

## Patentansprüche

1. Rechengerät zur Umrechnung von einer Währung in eine andere Währung, mit einem Speicher, einer Tastatur und einer Anzeigevorrichtung, gekennzeichnet durch einen zur Umrechnung von einer oder mehreren Währungen in eine bestimmte Währung programmierten Rechner, einen für den Empfang eines Wechselkurses übertragenden Funksenders ausgelegten Datenfunkempfängers, und einen dem Datenfunkempfänger nachgeschalteten Datendemodulator an dessen Ausgang die vom Funksender übertragenen Währungswechselkurse bereitgestellt, an den Speicher weitergeleitet und für die Umrechnung der Währungen dem Rechner bereitgestellt werden.

2. Rechengerät nach Anspruch 1, gekennzeichnet durch einen nichtflüchtigen Festdatenspeicher für feste Wechselkurse.

3. Rechengerät nach Anspruch 1 oder 2, dadurch gekennzeichnet, dass bei der Tastatur Tasten vorgesehen sind, wovon jede einer bestimmten Währung zugeordnet ist und deren Bestätigung die Umrechnung des über die Tastatur eingegebenen Betrages in der bestimmten Währung in den entsprechenden Betrag in der jeweiligen Taste zugeordnete Währung auslöst und die Anzeige des errechneten Betrages durch die Anzeigevorrichtung bewirkt und umgekehrt.

4. Rechengerät nach einem der Ansprüche 1 bis 3, dadurch gekennzeichnet, dass es stationär ist.

5. Rechengerät nach einem der Ansprüche 1 bis 3, dadurch gekennzeichnet, dass es tragbar ist.
